# EUROPÄISCHE PATENTSCHRIFT

(11) **EP 2 559 547 B1**
(45) Veröffentlichungstag und Bekanntmachung des Hinweises auf die Patenterteilung: **26.08.2015**
(21) Anmeldenummer: 12005555.3
(22) Anmeldetag: 31.07.2012
(51) Int. Cl.: B29C 65/34, F16L 47/03

(54) **Montagesystem zum Verschweißen von rohrförmigen Kunststoffbauteilen**
Mounting system to weld plastic tubular components
Système de montage pour le soudage de pièces tubulaires en matière plastique

(30) Priorität: 14.10.2011 DE 102011054502; 19.08.2011 DE 102011052855
(43) Veröffentlichungstag der Anmeldung: 20.02.2013
(73) Patentinhaber: Friatec Aktiengesellschaft, 68229 Mannheim (DE)
(72) Erfinder: Maier Fabian, 67368 Westheim (DE)
(74) Vertreter: Angerhausen, Christoph

(56) Entgegenhaltungen:
- DE-A1- 1 627 727
- DE-A1- 3 600 156
- JP-A- 5 050 507
- JP-A- 6 123 393
- JP-A- 2005 214 251

## Beschreibung

Die Erfindung betrifft ein Montagesystem zum Verschweißen von rohrförmigen Kunststoffbauteilen, mit einem Heizelement, dessen Heizdraht in Wendeln gefertigt ist, wobei die Wendel zumindest teilweise unverbunden sind, wobei das Heizelement federelastisches Material umfasst, z. B. aus federelastischem Material oder aus von einem zweiten federelastischen Material ummantelten ersten federelastischen Material bestehen kann, so dass sich unter Wirkung der Rückstellkräfte des federelastischen Materials ein im Wesentlichen hohlzylindrischer Körper mit einem ersten Ende und einem zweiten Ende ergibt, bei dem die Wendel aneinander liegen, wobei das Material so gewählt ist, dass der im Wesentlichen hohlzylindrische Körper axial aufweitbar ist und dass die Wendel radial aufweitbar sind. Ein solches Heizelement ist in der EP 2 463 080 A1 beschrieben, die als Dokument nach Art. 54(3) EPÜ zu berücksichtigen ist.

"Rohrförmige Bauteile" beziehungsweise "rohrförmige Kunststoffbauteile" meint dabei massive oder hohle Bauteile mit rundem oder unrundem Querschnitt, insbesondere Rohre, Stangen, Fittings, Muffen, Überschieber und dergleichen, aber auch sattelartige Bauteile und Halbschalen-Bauteile, deren Querschnitt einen Teilkreis umfasst, oder Verbund-Strangmaterial mit Kunststoffummantelung, wie kunststoffbeschichtete Rohre und Leitungen in Strom- und Kommunikationsnetzen und Versorgungsleitungen sowie in Offshore-Anwendungen und bei Fernwärme.

"Unverbunden" meint, dass benachbart liegende Wendel nicht direkt oder indirekt aneinander befestigt sind. Für die Erfindung brauchen nicht alle Wendel unverbunden zu sein, so sind beispielsweise bei einem bifilar geführten Heizdraht zwei Leitungen verbunden, so dass sich auch entsprechend Wendel ergeben, die im Heizelement verbunden sind.

In der Heizwendelschweißtechnik sind Fittings im Einsatz, welche entsprechend dem jeweiligen zu verbindenden Bauteil ausgewählt werden. Beim Heizwendelschweißen ist nur ein geringer Fügespalt überbrückbar, daher muss der Innendurchmesser des Fitting auf den Außendurchmesser des zu verbindenden Bauteils, beispielsweise eines Rohres, abgestimmt werden. Dabei gelingt die Schweißverbindung umso besser, je kleiner der Fügespalt ist.

Das Erfordernis des geringen Fügespaltes für die Verbindungstechnik führt bei Anwendungen, bei der eine Schweißzone mit einem Rohr oder einem anderen Bauteil überfahren werden muss, zu Problemen. Zum Einen kann die Schweißzone durch das Überfahren beschädigt werden, zum Anderen besteht die Gefahr, dass in die Schweißzone Schmutz eingetragen wird, was zu einer schadhaften Verbindung führen kann. Auch sind die Montagekräfte für das Überfahren einer Schweißzone mit geringem Fügespalt aufgrund des praktisch nicht vorhandenen Passungsspiels nicht unerheblich, dies umso mehr, wenn Deformationen und Ovalitäten am Rohrstrang zu finden sind.

Situationen, in denen eine Verbindungsstelle oder Schweißzone überfahren werden muss, treten zum Beispiel bei der Verlegung von Rohr-in-Rohr-Systemen in vorhandener Infrastruktur, wie Gas-, Wasser- und Abwasserrohren, auf. Hier ist es erforderlich, das Innenrohr über einen Verbindungsbereich beziehungsweise die Schweißzone in einer Ein- oder Ausschleusungsstelle anzufahren. Der Stand der Technik bietet dazu keine Lösung an. Die JP 06-123393 A1 offenbart ein Heizelement aus Nickel-Chrom-Draht, das auf einem Körper angeordnet ist. Ähnliches ist in der JP 05-50507 A1 gezeigt, wobei hier das Heizelement nicht selbsttragend ist. Die JP 2005-214231 A offenbart ein selbsttragendes Heizelement, bei dem die Wendel allerdings nicht aneinanderliegen.

In der bisher noch nicht veröffentlichten DE 10 2010 054 383.7 ist ein flexibles Heizelement, das als Heizwendel ausgestaltet ist, beschrieben, welches auf einer beliebigen Rohrposition aufgefädelt werden kann. Allerdings zeigt sich das Auffädeln der Heizwendel gerade bei kleineren Nennweiten aufgrund seiner Flexibilität als problematisch. Durch Berührung und Umwelteinfluss auf der Baustelle kann es überdies verschmutzt werden, auch muss das Heizelement vor UV-Bestrahlung geschützt werden.

Es hat sich gezeigt, dass bei Leerrohren mit kleineren Nennweiten die Gefahr des Abknickens durch mechanische Beanspruchung hinter der Verbindungsstelle aufgrund des Sprunges in der Wanddicke besteht, was die Funktion des Leerrohres zur Aufnahme und/oder Weiterleitung beeinträchtigt oder sogar unmöglich macht. Die geringe Wandstärke der Leerrohre bringt es außerdem mit sich, dass das Leerrohr während des Schweißvorganges und danach in der Abkühlphase fixiert werden muss, da sonst bereits das Eigengewicht zum Abknicken der Leerrohrleitung führen kann.

Ein weiterer Nachteil des beschriebenen flexiblen Heizelementes ist die Ausführung der Aufnahme im Einschleusungsbereich, welche, durch die austragende Ausführung bedingt, einen schlecht durchflossenen Bereich erzeugt. Insbesondere in Trinkwasserleitungen sollten diese sogenannten Toträume mit stagnierendem Wasser eliminiert werden, um die Gefahr der Keimbildung zu reduzieren.

Es ist daher die Aufgabe der Erfindung, ein Montagesystem mit einem flexiblen Heizelement zur Verfügung zu stellen, das gegen Kontamination schützt und das die Verbindungsstelle mechanisch stabilisiert.

Diese Aufgabe wird durch ein Montagesystem nach Anspruch 1 gelöst. Vorteilhafte Ausgestaltungen sind Gegenstand der Unteransprüche.

Erfindungsgemäß ist für das Montagesystem eine Innenhülse mit einem ersten freien Ende und einem zweiten freien Ende vorgesehen, deren Länge zumindest gleich der Länge des hohlzylindrischen Körpers des Heizelementes ist und deren Außendurchmesser zumindest über einen Abschnitt mit Länge des Heizelementes größer ist als der Innendurchmesser des hohlzylindrischen Körpers des Heizelementes. Das Heizelement wird auf die Innenhülse aufgeschoben, wobei das im Durchmesser kleinere Heizelement bei dieser Vormontage aufgeweitet wird, was aufgrund der Flexibilität des Heizelementes leicht möglich ist. Unter Wirkung der Rückstellkräfte des Heizelementes bleibt dieses sicher auf der Innenhülse sitzen.

Nach einer vorteilhaften Ausgestaltung weist die Innenhülse an ihrem ersten Ende eine Anschrägung auf, welche das Auf- und Abschieben des Heizelementes vereinfacht.

Weiter vorteilhaft weist das Montagesystem eine Schutzhülse mit einem ersten freien Ende und einem zweiten Ende, deren Innendurchmesser mindestens gleich dem Außendurchmesser des auf der Innenhülse sitzenden Heizelementes ist und deren Länge zumindest gleich der Länge des hohlzylindrischen Körpers des Heizelementes ist. Das auf der Innenhülse sitzende Heizelement wird durch die Schutzhülse vor Verschmutzung und UV-Bestrahlung weitgehend geschützt. Die Schutzhülse hat weiterhin den Vorteil, dass die Außenfläche zur Beschriftung oder als Trägerfläche für einen Barcode, der die Schweißdaten enthält, benutzt werden kann. Das frühere Heizelement bot diese Möglichkeit aufgrund fehlender vorhandener Flächen nicht. Es müssen hier die erforderlichen Schweißparameter für das Heizelement mittels Barcodekarte oder auch im Schweißgerät hinterlegt werden, was leicht zu Verwechslungen führen kann.

Im Folgenden soll die Erfindung anhand der beigefügten Zeichnungen näher erläutert werden. Die Darstellungen sollen lediglich die Grundsätze der Erfindung verdeutlichen und sind nicht notwendigerweise maßstabsgetreu. Es zeigt:
- Figur 1: eine perspektivische Ansicht eines Heizelementes für eine Vorrichtung gemäß der vorliegenden Erfindung;
- Figur 2: eine perspektivische Ansicht der Komponenten einer Vorrichtung gemäß der vorliegenden Erfindung nach einer bevorzugten Ausführungsform;
- Figur 3: eine Schnittansicht der Darstellung gemäß Figur 2;
- Figur 4a: eine Schnittansicht gemäß Figur 3, allerdings bei eingeschobenem Heizelement;
- Figur 4b: eine vergrößerte Ansicht der erfindungsgemäßen Vorrichtung im Bereich der Anschrägung der Innenhülse in Schnittdarstellung;
- Figur 5: eine perspektivische Ansicht der erfindungsgemäßen Vorrichtung mit eingesetztem Heizelement;
- Figur 6: eine Schnittansicht der Vorrichtung gemäß Figur 5;
- Figur 7: eine perspektivische Ansicht einer Adapterhülse vor einem Einschleusungsabgang;
- Figur 8: eine Längsschnittdarstellung des Einschleusungsabgangs aus Figur 7 mit eingesetztem Adapter;
- Figur 9: eine perspektivische Darstellung entsprechend der Figur 8 mit zusätzlich eingesetztem Leerrohr;
- Figur 10: eine Längsschnittdarstellung des Einschleusungsabgangs mit Adapter, Bypass und Knickschutz;
- Figur 11: die Positionierung einer erfmdungsgemäßen Vorrichtung auf dem Bypassrohr;
- Figur 12: eine Ansicht gemäß Figur 11 bei weiter eingeschobener erfindungsgemäßer Vorrichtung;
- Figur 13a, b und c: eine Abfolge von Schnittdarstellungen für den Einschiebevorgang; und
- Figur 14: eine perspektivische Ansicht zur Veranschaulichung einer weiteren Montagevariante

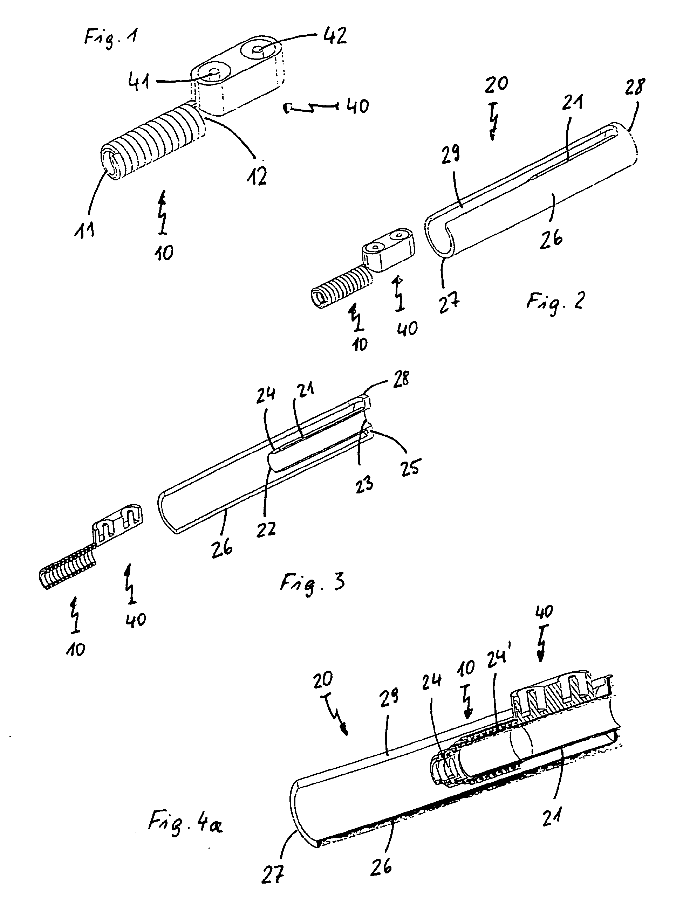

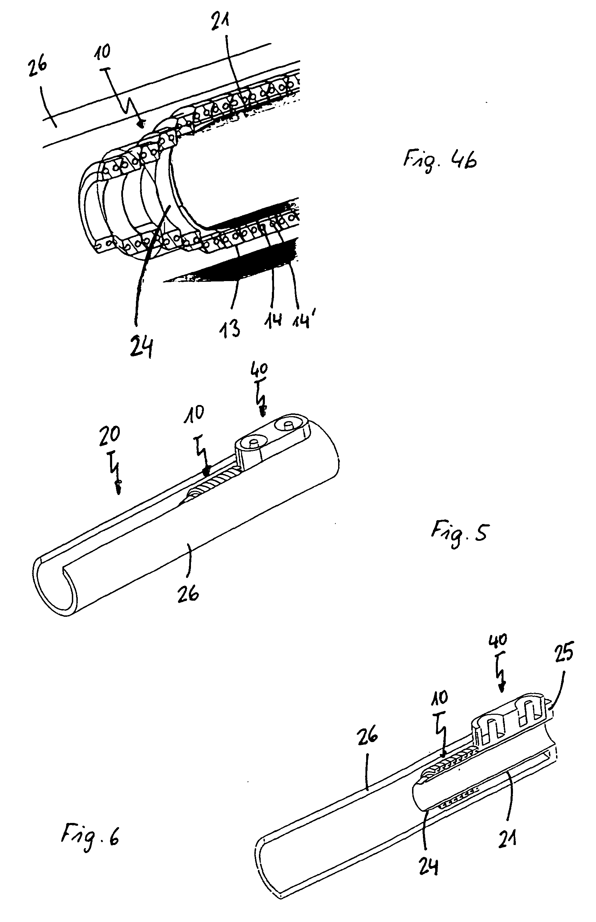

Figur 1 zeigt eine perspektivische Darstellung eines Heizelementes 10, das in Einzelheiten in der noch nicht veröffentlichten DE 10 2010 054 383.7 beschrieben ist. Das Heizelement 10 weist einen in der Zeichnung nicht erkennbaren, kunststoffummantelten Heizdraht auf, der in Wendeln gefertigt ist, wobei die Wendel zumindest teilweise unverbunden sind. Das Heizelement 10 weist weiterhin federelastisches Material auf, so dass sich unter Wirkung der Rückstellkräfte des federelastischen Materials ein im Wesentlichen hohlzylindrischer Körper, wie in der Zeichnung dargestellt, mit einem ersten Ende 11 und einem zweiten Ende 12 ergibt, bei dem die Wendel aneinander liegen. Der Heizdraht ist, wie in Zusammenhang mit der Figur 4b noch näher erläutert wird, bifilar geführt und ist mit den Anschlüssen 41, 42 eines Kontaktaugenblockes 40 verbunden. Über die Anschlüsse 41, 42 wird der Kontaktaugenblock 40 und damit das Heizelement 10 mit Energie beaufschlagt. Die Außenkontur des Kontaktaugenblockes 40 ist im Wesentlichen quaderförmig und mit seiner längsten Erstreckung im Wesentlichen mit der Achse des hohlzylindrischen Körpers des Heizelementes 10 ausgerichtet.

Figur 2 zeigt eine perspektivische Ansicht des Heizelementes 10 mit angeschlossenem Kontaktaugenblock 40 zusammen mit einer Anordnung aus Innenhülse 21 und Außenhülse 26, die im Folgenden auch als Knickschutz 20 bezeichnet wird. Die Schutzhülse 26 weist ein freies erstes Ende 27 und ein zweites Ende 28 auf. Ferner umfasst die Schutzhülse 26 einen in Längsrichtung verlaufenden Schlitz 29, der zum freien ersten Ende 27 hin offen ist und unmittelbar vor dem zweiten Ende 28 endet. Die lichte Weite oder Breite des Schlitzes 29 entspricht im Wesentlichen der Breite des Kontaktaugenblockes 40.

Figur 3 zeigt eine Längsschnittansicht der Darstellung der Figur 2. Die Innenhülse 21 weist ein freies erstes Ende 22 und ein zweites Ende 23 auf, wobei an dem freien ersten Ende 22 eine Anschrägung 24 angebracht ist, so dass die Innenhülse 21 auch als ein hohler Innendorn bezeichnet werden kann. Die Innenhülse 21 ist koaxial von der Schutzhülse 26 umschlossen,
wobei zwischen diesen ein Spalt verbleibt. Die Innenhülse 21 und die Schutzhülse 26 sind an ihren jeweiligen zweiten Enden 23, 28 aneinander über einen Ringflansch 25 festgelegt, so dass das zweite Ende 23 der Innenhülse 21 offenbleibt, das zweite Ende 28 der Schutzhülse 26 jedoch verschlossen ist. Bei der dargestellten Ausführungsform beträgt die Länge der Schutzhülse 26 etwa das Doppelte der Länge der Innenhülse 21. Andere Abmessungen können gewählt werden, sofern dies als zweckdienlich erscheint.

Figur 4a zeigt eine Längsschnittansicht, in der das Heizelement 10 mit Kontaktaugenblock 40 in den Knickschutz 20 eingesetzt und nahezu vollständig auf die Innenhülse 21 geschoben ist. Während des Schiebens wird der Kontaktaugenblock 40 in dem Schlitz 29 geführt und dient somit als Manipulationshilfe für das Aufschieben des Heizelementes 10 auf die Innenhülse 21 vom freien ersten Ende 27 der Schutzhülse 26 her. Das Heizelement 10 wird dabei zunächst über die Anschrägung 24 geführt und dann auf einen sich an die Anschrägung 24 anschließenden Abschnitt 24'der Innenhülse 21 gebracht, dessen Außendurchmesser größer ist als der Innendurchmesser des hohlzylindrischen Körpers des Heizelementes 10 um Urzustand, so dass dieser sich radial aufweitet, was aufgrund der Flexibilität der Wendeln beziehungsweise der Federelastizität des Materials des Heizelementes leicht möglich ist. Aufgrund der nun vorhandenen Rückstellkräfte des Heizelementes 10 bleibt dieses sicher auf der Innenhülse 21 sitzen, wenn es vollständig aufgeschoben ist und der Kontaktaugenblock 40 am geschlossenen Ende der Schlitzes 29 anliegt. Es können auch weitere Positionierhilfen vorhanden sein, beispielsweise Einrastnasen am Kontaktaugenblock 40 zur Schutzhülle 26 des Knickschutzes 20 hin, die jedoch in der Zeichnung nicht dargestellt sind.

Figur 4b ist eine Detaildarstellung der Figur 4a, aus der das radiale Aufweiten des Heizelementes 10 hervorgeht. Das Heizelement 10 besteht aus einer Anzahl Wendeln 13, in denen ein Heizdraht 14, 14' bifilar geführt ist. Die Wendel 13 sind dabei unverbunden, so dass sie radial aufweitbar sind. Wenn jetzt das Heizelement 10 vom ersten freien Ende 27 (Fig. 4a) der Schutzhülse 26 her auf die Innenhülse 21 geschoben wird, trifft es zunächst auf die Anschrägung 24, die bewirkt, dass die Wendel 13 nach und nach aufgeweitet werden, bis sie schließlich einen hohlzylindrischen Körper bilden, der sicher auf der Außenfläche der Innenhülse 21 sitzt.

Figur 5 zeigt eine perspektivische Ansicht eines vormontierten Montagesystems mit in dem Knickschutz 20 sitzenden Heizelement 10 und Kontaktaugenblock 40. Die Außenfläche der Schutzhülse 26 des Knickschutzes 20 kann dabei beschriftet werden oder als Trägerfläche für einen Barcode, der die Schweißdaten enthält, genutzt werden.

Figur 6 zeigt eine Längsschnittansicht, der Darstellung der Figur 5. Das Heizelement 10 sitzt mitsamt dem Kontaktaugenblock 40 auf der Innenhülse 21, deren Länge so gewählt ist, dass in diesem Zustand die Anschrägung 24 nicht mehr mit Wendeln des Heizelementes 10 belegt ist, dieses also wieder einen hohlzylindrischen Körper mit einheitlichem Durchmesser angenommen hat. Der Kontaktaugenblock 40 ist in Anlage an den Ringflansch 25 gebracht. Der Innendurchmesser der Schutzhülse 26 ist so gewählt, dass er größer ist als der Außendurchmesser des auf der Innenhülse 21 sitzenden Heizelementes 10, so dass ein Aufschieben des Heizelementes 10 auf die Innenhülse 21 erfolgen kann, ohne dass Beschädigungen an dem Heizelement 10 zu erwarten sind. Durch die Schutzhülse 26 ist der Schutz des Heizelementes 10 vor Verschmutzung und vor UV-Bestrahlung sichergestellt.

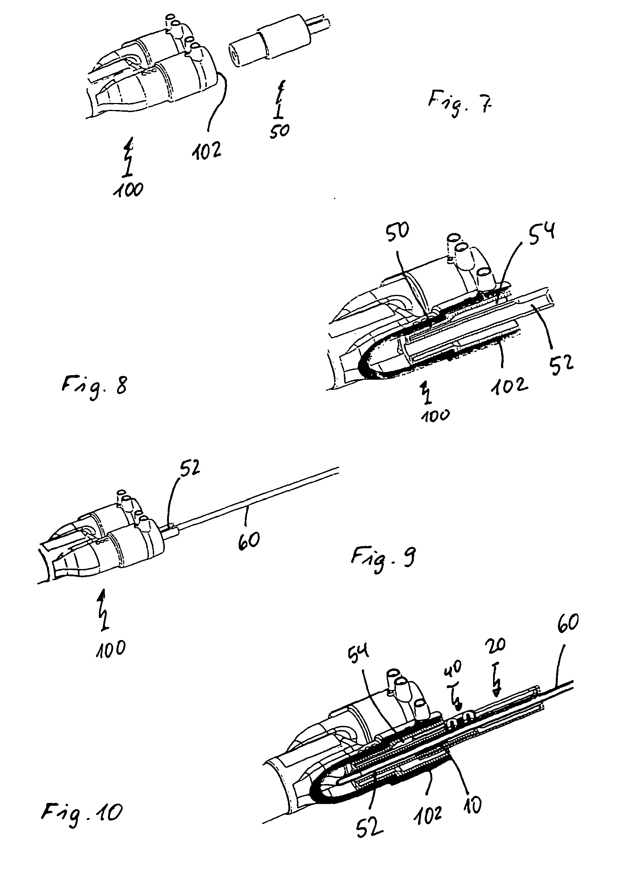

Figur 7 zeigt in perspektivischer Darstellung ein Einschleusungsbauteil 100, das für die Verschweißung vorbereitet werden soll. Dazu wird eine Adapterhülse 50 bereit gestellt, deren Außenkontur der Innenkontur des Abgangs 102 des Einschleusungsbauteils 100 entspricht, in die später (vgl. Fig. 10) der Knickschutz 20 mit vormontiertem Heizelement 10 eingesetzt wird.

Diese Adapterhülse 50 wird in den für die Einschleusung vorgesehenen Abgang 102 des Einschleusungsbauteils 100 eingeschweißt. Somit wird der Totraum, der bei einem Standardfitting im Einschleusungsbereich vorhanden ist, minimiert. Als Alternative könnte die Kontur direkt im Fitting totraumoptimiert gestaltet sein.

Figur 8 zeigt eine Längsschnittansicht des Abgangs 102 bei eingeschweißter Adapterhülse 50. Die Adapterhülse 50 weist einen Durchlass 52 auf, durch den ein Leerrohr oder Bypassrohr 60, wie in Figur 9 gezeigt, in das Leerrohr des Abganges 102 geschoben werden kann. Somit kann ein Bypassrohr 60 problemlos über die Verbindungsstelle eingebracht werden, bis es die Lage erreicht, die in der Längsschnittdarstellung der Figur 10 veranschaulicht ist. Im Durchlass 52 entsteht ein Montagespalt, der im Wesentlichen der Dicke der Wendel des Heizelementes 10 entspricht.

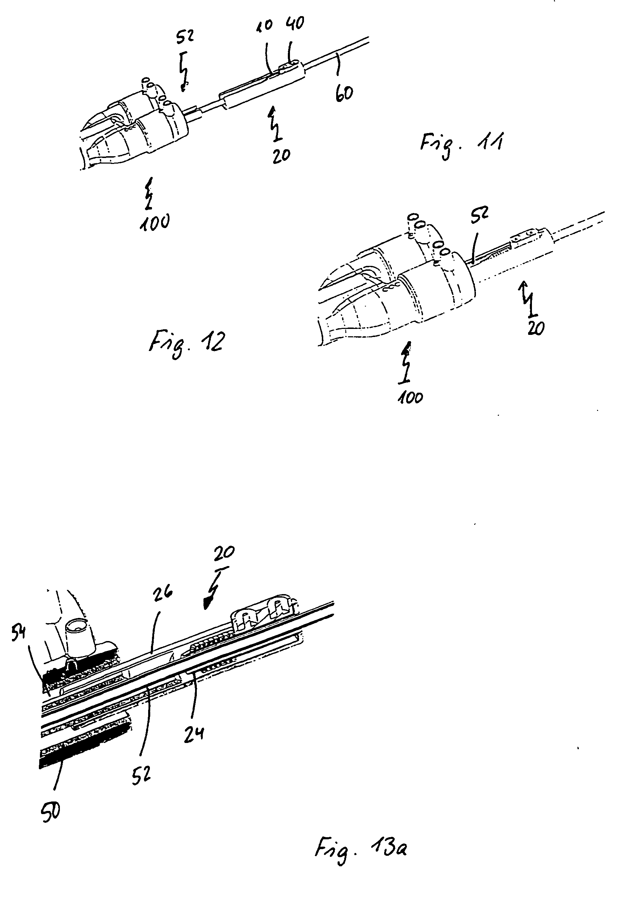

Figur 10 zeigt eine Längsschnittansicht des Einschleusungsabganges 102 mit eingeschweißter Adapterhülse 50 und eingesetztem Bypassrohr 60, wobei der Knickschutz 20 mit vormontiertem Heizelement 10 und Kontaktaugenblock 40 auf das Bypassrohr 60 geschoben ist. Der Knickschutz 20 übergreift dabei mit der Schutzhülse 26 den Durchlass 52 und ragt in den Montageraum 54. Befinden sich der Knickschutz 20 und das Bypassrohr 60 in Schweißposition, wird das Heizelement 10 über den Kontaktaugenblock 40 von der Innenhülse 21 in seine Schweißposition zwischen Bypassrohr 60 und Durchlass 52 geschoben. Durch eine geeignete Verriegelung und Positionierhilfe im Becher der Adapterhülse 50 und beim Knickschutz 20 ist die sichere Positionierung zueinander gewährleistet. Die genaue Abfolge ist in den Figuren 11 und 12 sowie 13a, 13b und 13c gezeigt.

Figur 11 zeigt in perspektivischer Ansicht das Einschleusungsbauteil 100 mit bereits eingeschweißter Adapterhülse, wobei nur deren freiliegendes Ende des Durchlasses 52 erkennbar ist. Ein Knickschutz 20 mit vormontiertem Heizelement 10 sowie Kontaktaugenblock 40 ist auf das Bypassrohr 60 gefädelt, welches bereits durch den Durchlass 52 der Adapterhülse und die Schleuse des Einschleusungsbauteils 100 geführt ist. Wie in Figur 12 zu sehen ist, wird nun der Knickschutz 20, auf dem Bypassrohr 60 gleitend, über den Durchlass der Adapterhülse 52 geschoben.

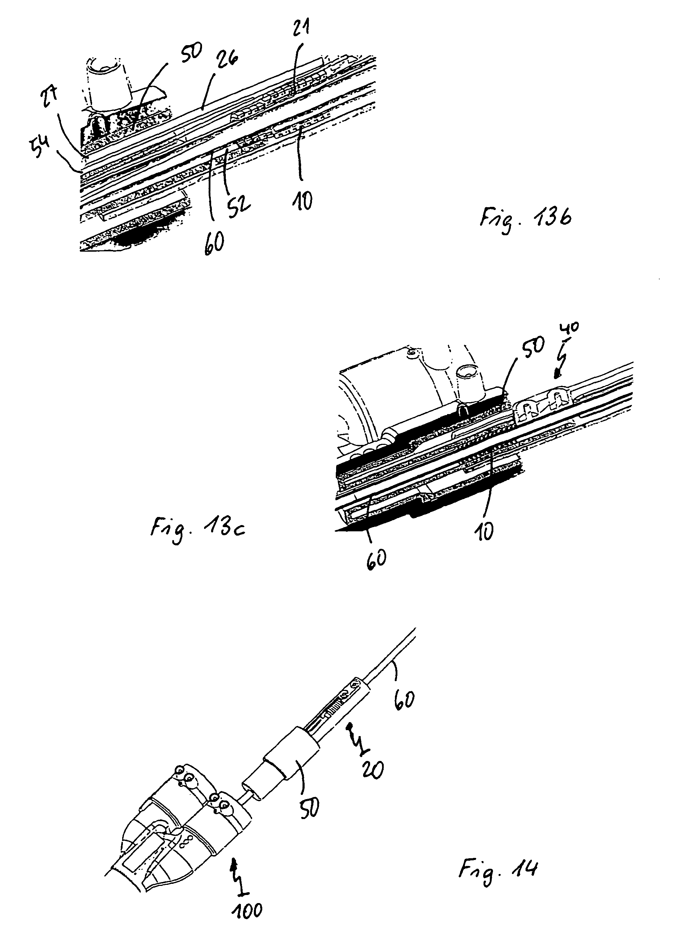

Dabei gelangt, wie in Figur 13a zu erkennen ist, die Schutzhülse 26 des Knickschutzes 20 in den Montageraum 54 der Adapterhülse 50, während die Innenhülse 21 mit ihrer Anschrägung voran in den Durchlass 52 geführt wird. Sobald das freie Ende 27 der Schutzhülse 26 seine Anschlagposition im Montageraum 54 erreicht hat, wie in Figur 13b dargestellt, liegt die Anschrägung 24 der Innenhülse 21 unmittelbar vor der Eingangsöffnung des Durchlasses 52. Mit Hilfe der Kontaktaugenblöcke 40 wird nun das Heizelement 10 von der Innenhülse in den Durchlass 52 bewegt.

Durch die Elastizität des Heizelementes 10, welches in seine Ausgangsform zurückkehren möchte, und den entsprechend ausgebildeten Aus- und Einläufen der Innenhülse 21 sowie der Adapterhülse 50 legen sich die Wendel des Heizelementes 10 auf die Außenfläche des Bypassrohres 60. Durch eine besondere Ausgestaltung der Spiralganggeometrie des Heizelementes 10, ebenfalls in der DE 10 2010 054 383.7 beschrieben, wird dieser Effekt noch unterstützt. Wenn der Kontaktaugenblock 40 am freiliegenden Ende der Adapterhülse 50 anliegt, hat das Heizelement 10 seine Schweißposition erreicht, die in Figur 13c gezeigt ist.

In dieser Position kann das Heizelement 10 mit den Standardsteckern eines Schweißgerätes kontaktiert werden. Gegebenenfalls erfolgt eine Sicherung der Position der Bauteile zueinander. Durch Einlesen des Schweißbarcodes, der sich auf der Außenseite des Knickschutzes 20 befinden kann, werden die Schweißparameter an das Schweißgerät übermittelt.

Der Durchgangskanal für das Bypassrohr 60 im Knickschutz 20 und in der Adapterhülse 50 wirkt beim Schweiß- und Abkühlvorgang als Fixierung des Leerrohres 60. Somit kann auf eine Halte- und Fixiervorrichtung auch bei Rollenware verzichtet werden.

Nach Beendigung des Schweißvorgangs kann der Knickschutz 20 an der Kontaktstelle verbleiben und wirkt dort als Schutz gegen das Abknicken direkt nach dem Wanddickensprung an der Schweißstelle.

Die Reihenfolge der Bauteile bei der Montage kann den Einsatzbedingungen angepasst werden. Bis hier ist die Möglichkeit beschrieben, zunächst die Adapterhülse 50 ohne Knickschutz 20 einzusetzen, anschließend das Leerrohr 60 einzubringen und danach den Knickschutz 20 samt Heizelement 10 über das Leerrohr 60 in Position zu schieben. Um den erforderlichen Säuberungs- und Schälvorgang im Leerrohr des Abgangs 102 zu vereinfachen, sollte allerdings zunächst das Bypassrohr 60 in das Einschleusungsbauteil und durch dessen Schleuse geführt und erst im Nachhinein die Adapterhülse 50 samt Knickschutz 20 montiert werden.

Figur 14 zeigt das Einführen der vormontierten Adapterhülse 50 mit Knickschutz 20 auf das vorher eingezogene Leerrohr 60. Bei dieser Variante wird die notwendige Vorbereitung der Schweißstelle vereinfacht. Es besteht des Weiteren die Möglichkeit, die vormontierte Adapterhülse 50 mit Knickschutz 20 in den Abgang 102 einzuschweißen und danach das Leerrohr einzuziehen.

## Patentansprüche

1. Montagesystem zum Verschweißen von rohrförmigen Kunststoffbauteilen, mit
- einem Heizelement (10), dessen Heizdraht in Wendeln gefertigt ist, wobei die Wendel zumindest teilweise unverbunden sind, wobei das Heizelement (10) federelastisches Material umfasst, so dass sich unter Wirkung der Rückstellkräfte des federelastischen Materials ein im Wesentlichen hohlzylindrischer Körper mit einem ersten Ende (11) und einem zweiten Ende (12) ergibt, bei dem die Wendel aneinander liegen, wobei das Material so gewählt ist, dass der im Wesentlichen hohlzylindrische Körper axial aufweitbar ist und dass die Wendel radial aufweitbar sind,
- einer Innenhülse (21) mit einem freien ersten Ende (22) und einem zweiten Ende (23), deren Länge zumindest gleich der Länge des hohlzylindrischen Körpers des Heizelementes (10) ist und deren Außendurchmesser zumindest über einen Abschnitt mit Länge des Heizelementes (10) größer ist als der Innendurchmesser des hohlzylindrischen Körpers des Heizelementes (10), und
- einer Schutzhülse (26) mit einem freien ersten Ende (27) und einem zweiten Ende (28), deren Innendurchmesser mindestens gleich dem Außendurchmesser des auf der Innenhülse (21) sitzenden Heizelementes (10) ist und deren Länge zumindest gleich der Länge des hohlzylindrischen Körpers des Heizelementes (10) ist, wobei
die Innenhülse (21) und die Schutzhülse (26) koaxial angeordnet und an ihren zweiten Enden (23, 28) aneinander festgelegt sind.

2. Montagesystem nach Anspruch 1, **dadurch gekennzeichnet, dass** die Innenhülse (21) an ihrem ersten Ende (22) eine Anschrägung (24) aufweist.

3. Montagesystem nach Anspruch 1, **dadurch gekennzeichnet, dass** die Schutzhülse (26) einen in Längsrichtung verlaufenden Schlitz (29) aufweist, der zum freien ersten Ende (27) hin offen ist,

4. Montagesystem nach Anspruch 1, **dadurch gekennzeichnet, dass** das Heizelement (10) bifilaren Heizdraht aufweist, der am zweiten Ende des hohlzylindrischen Körpers mit einem Kontaktaugenblock (40) verbunden ist.

5. Montagesystem nach Anspruch 4, soweit auf Anspruch 3 rückbezogen, **dadurch gekennzeichnet, dass** die Breite des Kontaktaugenblocks (40) der Breite des in der Schutzhülse (26) verlaufenden Schlitzes (29) entspricht.

6. Montagesystem nach einem der Ansprüche 1 bis 5, **dadurch gekennzeichnet, dass**
- die Länge der Innenhülse (21), vermindert um die Länge der Anschrägung (24), im Wesentlichen gleich der Länge des Heizelementes (10), zuzüglich der Länge des Kontaktaugenblockes ist;
- das Heizelement (10) auf der Innenhülse (21) sitzt, so dass der Kontaktaugenblock am geschlossenen Ende des Schlitzes (29) nahe dem zweiten Ende (28) der Schutzhülse (26) anliegt; und
- das erste freie Ende (27) der Schutzhülse (26) sich in Längsrichtung über das erste freie Ende (22) der Innenhülse (21) hinaus erstreckt.

## Claims

1. A mounting system for welding tubular plastic components, having
- a heating element (10), the heating wire of which is manufactured as coils, wherein the coils are at least partially unattached, wherein the heating element (10) comprises a resilient material such that, under the effect of the restoring forces of the resilient material, an essentially hollow cylindrical body having a first end (11) and a second end (12) is formed, in which the coils abut one another, wherein the material is selected such that the essentially hollow cylindrical body is axially expandable and that the coils are radially expandable,
- an inner sleeve (21) having a free first end (22) and a second end (23), the length of which is at least equal to the length of the hollow cylindrical body of the heating element (10), and the outer diameter thereof, at least over a section of length of the heating element (10), is greater than the inner diameter of the hollow cylindrical body of the heating element (10), and
- a protective sleeve (26) having a first free end (27) and a second end (28), the inner diameter of which is at least equal to the outer diameter of the heating element (10) seated on the inner sleeve (21), and the length of which is at least equal to the length of the hollow cylindrical body of the heating element (10), wherein
the inner sleeve (21) and the protective sleeve (26) are coaxially arranged and are affixed to one another at their second ends (23, 28).

2. The mounting system according to Claim 1, **characterized in that** the inner sleeve (21) has a chamfer (24) at its first end (22).

3. The mounting system according to Claim 1, **characterized in that** the protective sleeve (26) has a slot (29) extending in the longitudinal direction, which is open toward the free first end (27).

4. The mounting system according to Claim 1, **characterized in that** the heating element (10) has a bifilar heating wire, which is connected at the second end of the hollow cylindrical body to a contact eye block (40).

5. The mounting system according to Claim 4, related in as much to Claim 3, **characterized in that** the width of the contact eye block (40) corresponds to the width of the slot (29) situated in the protective housing (26).

6. The mounting system according to one of Claims 1 through 5, **characterized in that**
- the length of the inner sleeve (21), reduced by the length of the chamfer (24), is essentially equal to the length of the heating element (10), in addition to the length of the contact eye block;
- the heating element (10) is seated on the inner sleeve (21) in such a way that the contact eye block abuts the closed end of the slot (29) near the second end (28) of the protective sleeve (26); and
- the first free end (27) of the protective sleeve (26) extends in the longitudinal direction beyond the first free end (22) of the inner sleeve 21).

## Revendications

1. Système de montage permettant de souder des pièces tubulaires en matière plastique, comportant
- un élément de chauffage (10), dont le fil chauffant est réalisé en spires, les spires n'étant pas liées au moins en partie, l'élément de chauffage (10) comportant un matériau élastique, de telle sorte que sous l'effet de la force de rappel du matériau élastique, il se forme un corps sensiblement cylindrique creux avec une première extrémité (11) et une deuxième extrémité (12), dans lequel les spires sont disposées les unes contre les autres, le matériau étant choisi de telle sorte que le corps sensiblement cylindrique creux peut s'évaser axialement et de telle sorte que les spires peuvent s'évaser radialement,
- une gaine intérieure (21) avec une première extrémité (22) libre et une deuxième extrémité (23), dont la longueur est au moins égale à la longueur du corps cylindrique creux de l'élément de chauffage (10) et dont le diamètre extérieur, au moins sur une portion avec la longueur de l'élément de chauffage (10), est supérieur au diamètre intérieur du corps cylindrique creux de l'élément de chauffage (10), et
- une gaine de protection (26) avec une première extrémité (27) libre et une deuxième extrémité (28), dont le diamètre intérieur est au moins égal au diamètre extérieur de l'élément de chauffage (10) posé sur la gaine intérieure (21) et dont la longueur est au moins égale à la longueur du corps cylindrique creux de l'élément de chauffage (10),
la gaine intérieure (21) et la gaine de protection (26) étant disposées coaxialement et étant fixées l'une à l'autre au niveau de leur deuxième extrémité (23, 28).

2. Système de montage selon la revendication 1, **caractérisé en ce que** la gaine intérieure (21) comporte un chanfrein (24) au niveau de sa première extrémité (22).

3. Système de montage selon la revendication 1, **caractérisé en ce que** la gaine de protection (26) comporte une fente (29) orientée dans le sens longitudinal et ouverte vers la première extrémité (27) libre.

4. Système de montage selon la revendication 1, **caractérisé en ce que** l'élément de chauffage (10) comporte un fil chauffant bifilaire qui, au niveau de la deuxième extrémité du corps cylindrique creux, est relié à un bloc à oeils de contact (40).

5. Système de montage selon la revendication 4, pour autant qu'elle se réfère à la revendication 3, **caractérisé en ce que** la largeur du bloc à oeils de contact (40) correspond à la largeur de la fente (29) réalisée dans la gaine de protection (26).

6. Système de montage selon l'une quelconque des revendications 1 à 5, **caractérisé en ce que**
- la longueur de la gaine intérieure (21), moins la longueur du chanfrein (24), est sensiblement égale à la longueur de l'élément de chauffage (10), plus la longueur du bloc à oeils de contact ;
- l'élément de chauffage (10) est posé sur là gaine intérieure (21), de telle sorte que le bloc à oeils de contact est situé au niveau de l'extrémité fermée de la fente (29) à proximité de la deuxième extrémité (28) de la gaine de protection (26) ;
- la première extrémité (27) libre de la gaine de protection (26) s'étend dans le sens longitudinal au-delà de la première extrémité (22) libre de la gaine intérieure (21).
